# EUROPEAN PATENT SPECIFICATION

(11) **EP 3 748 263 B1**
(45) Date of publication and mention of the grant of the patent: **03.12.2025**
(21) Application number: 19178880.1
(22) Date of filing: 06.06.2019
(51) Int. Cl.: F25D 23/02, A47F 3/04

(54) **FREEZER OR CHILLER DEVICE**
GEFRIER- ODER KÜHLVORRICHTUNG
DISPOSITIF DE CONGÉLATION OU DE RÉFRIGÉRATION

(43) Date of publication of application: 09.12.2020
(73) Proprietor: SCHOTT AG, 55122 Mainz (DE); SCHOTT Termofrost s.r.o., 757 01 Valasské Mezirící (CZ)
(72) Inventor: Diederichs, Jochen, 55128 Mainz (DE); Smajser, Petr, 742 66 Stramberk (CZ); Rafaj, Martin, 75501 Vsetín (CZ)
(74) Representative: Ullrich & Naumann PartG mbB

(56) References cited:
- WO-A1-2005/021886
- WO-A2-2010/042186
- WO-A2-2012/084498
- US-A1- 2005 202 178

## Description

The present invention relates to a freezer or chiller device, comprising a swing door system.

Conventional freezer devices can be found in super markets, convenience stores or the like to provide frozen products for customers, usually being presented on shelves inside the freezer device. Such freezer devices usually comprise a cabinet and a plurality of swing doors, which can be opened in horizontal direction by a customer, i.e. by rotating the swing doors around a vertical axis. The swing doors further have circumferential sealings providing a sealing function between the inner of the freezer device and its outside. The sealings attached to the swing doors can comprise magnets to provide a magnetic force-locking connection with mullions and horizontal profiles of the freezer device. This avoids leakage of ambient warm air from the outside of the freezer device into the inside and therefore avoids unnecessary energy consumption for cooling as well as icing and condensation inside the freezer device. Further, the swing doors usually comprise large glass panes so that a customer can view the products from outside without having to open the swing doors.

However, most of the freezer devices are arranged with their shelves parallel to the aisles of the supermarket. Due to the mullions of the freezer device, i.e. vertical profiles, a person, when walking down the aisle, has an angled and very limited view on the products within the freezer device, since the mullions block a non-neglectable part of the total view of a customer on these products.

WO 2010/042186 A2 relates to a low-profile, elongated LED light fixture that is retrofitted to the display case mullion to provide efficient illumination.

WO 2012/084498 A2 relates to a refrigerator wherein the interior volume is illuminated effectively.

Embodiments of the invention therefore address the problems of providing an enhanced comfort for customers when accessing a freezer or chiller device while providing a sufficient sealing function between the inside and outside of a freezer or chiller device together with a sufficient mechanical robustness, flexibility in terms of applicability and implementation and a high visibility of goods from outside the freezer device.

The invention provides a freezer or chiller device comprising all the features of independent claim 1.

Preferred embodiments are defined in the dependent claims.

The term "freezer device" refers to a device in which the temperature of the foodstuffs is typically kept between -12°C and -30 °C on normal conditions of use. Normal conditions are defined as operating conditions, which exist when the cabinet, including all permanently located accessories, has been set up and situated in accordance with the recommendations of the manufacturer and is in service. Typical examples for such foodstuffs are the products which are stored according to EN23953, part 2 (September 2012) in the temperature classes L1, L2 and L3.

The term "chiller device" refers to a device in which the temperature of the foodstuffs is typically kept between -5°C and +10°C on normal conditions of use, preferably between 0°C and +7°C. Typical examples for such foodstuffs are the products which are stored according to EN23953, part 2 (September 2012) in the temperature classes M1 and M2.

The term "mullion" refers to a vertical profile of a freezer device where a door is arranged in a cabinet and wherein the mullion is not a vertical side profile of an outer frame, but an "inner" vertical profile in particular arranged in the area of two adjacent doors.

The term "transparent" refers to a region, area or the like which is optically provided such that the view on the goods, products or the like inside the freezer or chiller device is not obstructed or blocked by one or more opaque elements of the freezer or chiller device, for example by spacers, profiles, gaskets, a mullion or by the swing doors. The term "transparent" or "transparency" according to embodiments of the present invention may include the following definition: Transparency of an element means that light can pass said element without being scattered, in particular enable application of Snell's law for the light path and/or enables image formation.

The term "non-transparent" refers to a region, area or the like which is optically provided such that the view on the goods, products or the like inside the freezer device is obstructed or blocked by one or more opaque elements of the freezer device, for example by spacers, profiles, gaskets or by the swing doors.

The term "translucent" refers to a region, area or the like which is optically provided such that the view on goods, products or the like inside the freezer device is not obstructed or blocked but being diffuse, for instance the dimensions of a product can be seen, but not any labeling of the product, at least not clearly. Transparent materials may appear clear, with the overall appearance of one color, or any combination.

The term "at least" with regard to the term "translucent" means that e.g. the optical visibility of products behind an at least translucent element is translucent or greater or better, i.e. between translucent and transparent, or in other words the optical visibility of products behind an at least translucent element is improved. The term "at least translucent" includes therefore "transparent".

The term "width" refers to a length measured in the plane in which the swing doors are arranged when the swing doors are in a closed position.

The terms "depth" or "thickness" refer to a length measured in the plane being perpendicular to the plane in which swing doors are arranged when the swing doors are in the closed position.

The term "vertical" refers to the direction aligned with the direction of the force of gravity, up or down, as materialized with a plumb line.

The term "horizontal" refers to the direction perpendicular to the vertical direction. For instance, a horizontal profile is a profile of the device extending in the horizontal direction, in other words parallel to the surface of the earth.

The term "essentially" with regard to the terms relating to a shape, form or the like of an element refers not only to the strict form, shape or the like but also to a shape, form or the like which deviates from the strict form, for instance by rounded corners, different formed connections between corners or the like.

One of the advantages is that in particular the angled view or the view directly in front of the freezer device or chiller device on the products is not blocked and therefore the comfort for customers is increased. A further advantage is, that a cost-effective implementation can be provided. A further advantage is that support, stability and stiffness of the freezer or chiller device can be enhanced due to the mullion.

Further features, advantages and preferred embodiments are disclosed or may become apparent in the following.

According to the invention said mullion is fully transparent. This even further enhances the comfort for customers and their view on products.

According to a further embodiment said sealing element is at least translucent at least in part. This avoids a blocking of the view of customers due to a non-transparent sealing element. In other words, the view on products of freezer devices and chiller devices is further enhanced.

According to a further embodiment said sealing element is compressible. This enables a reliable sealing function between inside and outside of a chiller or freezer device, since small deviations between the surfaces of a swing door and a mullion can be compensated.

According to a further embodiment said mullion and/or said sealing element comprises at least one force-locking element providing a force-locking connection between said mullion and said at least one swing door. This enables a reliable but simple locking mechanism for the swing door with the mullion.

According to a further embodiment said force-locking element of said sealing element is arranged at the lower and/or upper vertical section of said swing door and/or in the area of a handle. When said force-locking element is arranged in the upper and/or lower vertical section of a swing door, the view for a customer is usually not blocked by said force-locking element. The same applies by arranging the force-locking element in the area of a handle for opening the swing door. Usually the handle is opaque and therefore a further view blocking by the force-locking element is avoided.

According to a further embodiment said force-locking element is a magnet, preferably a permanent magnet. This enables a very reliable sealing function between said swing door and said mullion. The sealing function may be further enhanced by arranging in a step-by-step manner permanent magnets within the mullion and/or sealing element. Alternatively, or additionally said sealing element may comprise a horizontal section and/or an additional sealing arranged preferably along the horizontal interface between a swing door element or an area and an outer horizontal frame profile or a cabinet structure providing a sealing of the corresponding door with the frame profile or the cabinet structure.

According to a further embodiment said force-locking element is provided in form of a plurality of particles, preferably distributed, in particular uniformly, at least in part within the sealing element. This provides a reliable force-locking connection without solid large elements blocking the view for customers.

According to a further embodiment said at least one swing door and/or said mullion comprise a heating element, preferably in form of a heating wire and/or heating cable. For example, a heating element can prevent condensation of the transparent regions of a swing door by heating corresponding part of the mullion and/or the swing door and light elements can illuminate products. A wire or cable is thin with respect to the mullion or the sealing element and therefore blocking of the view by said wire or cable on products is minimized.

According to a further preferred embodiment said sealing element is formed translucent in part to hide said heating element. This enhances the optical impression for a customer by avoiding direct view on the view blocking element, here in form of the heating element.

According to a further preferred embodiment said swing door system comprises a reflective element, preferably in form of a mirror element and/or a reflective coating. This enhances the optical impression for a customer by blocking the view on a non-transparent element, for instance a heating element or the like. Due to the reflective property the view of the consumer is distracted from the non-transparent element and the consumer is provided with an enhanced overall optical impression.

According to a further preferred embodiment said at least one swing door comprise a light element, preferably in form of LED light strip. This enables illumination of products behind the swing door and/or the mullion.

According to a further preferred embodiment said swing door comprises a gas-filled insulating glass unit or a vacuum glass unit, said gas-filled insulating glass unit or said vacuum glass unit comprises at least two glass panes being spaced apart from each other by a spacer element, preferably wherein said spacer element is at least partially translucent, preferably at least partially transparent. This provides a high appealing design of the swing door while providing a high thermal insulation. Said gas-filled insulating unit may comprise air and/or a one or more noble gases. An at least translucent, preferably at partially transparent spacer element enhances the view of customers on products behind the swing doors since there is no blocking of the view by non-transparent spacers.

According to a further preferred embodiment said at least one swing door and/or said mullion comprise a hollow profile. A hollow profile enables a flexible, light-weight and cost-sensitive swing door or part of it and/or of the mullion.

According to a further preferred embodiment said heating element and/or said light element is arranged inside said hollow profile of said at least one swing door. This enables a space-saving arrangement of further functional elements like said light element, heating element or the like.

According to a further preferred embodiment said hollow profile of said at least one swing door is arranged between at least one glass pane forming said transparent pane of said at least one swing door and said sealing element. This enables a space-saving arrangement of the profile while providing support for said sealing element.

According to a further preferred embodiment said at least one swing door comprises at least two glass panes, wherein one pane extends perpendicular to an opening direction of said at least one swing door over the other glass pane, wherein said hollow profile is attached in the extending region of said extending glass pane. One of the advantages is that a protection for the glass panes or in general the swing door can be provided. A further advantage is that further functional elements can be arranged with or inside said hollow profile near the mullion in a closed position of the swing door.

According to a further preferred embodiment said hollow profile and said mullion having essentially the same cross-sectional shape. This enables easy manufacturing and easy alignment of the surfaces of the hollow profile and the mullion.

According to a further preferred embodiment said mullion and/or hollow profile have an essentially rectangular, essentially triangular or essentially t-shaped cross-section. On the one hand this enables an easy and cost-effective manufacturing of said mullion and said hollow profile. On the other hand, this enables in particular an easy alignment of surfaces of said hollow profile and said mullion.

According to a further preferred embodiment said sealing element is attached to said mullion. This enables a simpler construction of the swing door.

According to a further preferred embodiment a rotating axis of said at least one swing door is in the center of said at least one swing door, said center being defined with respect to the thickness of said at least one swing door perpendicular to the opening direction in a closed position of said at least one swing door or wherein the rotating axis of said at least one swing door is off the center of said at least one swing door, said center being defined with respect to the thickness of said at least one swing door perpendicular to the opening direction in a closed position of said at least one swing door. The latter enhances the flexibility in terms of the swing door, since only a neglectable part of the swing door moves to the inside, that means opposite to the opening direction when being opened. Such a part may block the adjacent swing door or requires a larger distance to the adjacent swing door so that it can be opened. The former provides an easy opening of said swing door without interfering with an adjacent swing door.

According to a further preferred embodiment of the freezer or chiller device said freezer device comprises an upper and/or lower horizontal element to provide a stop for the at least one swing door of said swing door system and/or to provide a part for a force-locked swing door at the freezer or chiller device and/or wherein said freezer or chiller device comprises an energy source for providing heat and/or electric energy and an interface for connecting a heating element, a light element or a sensor of the swing door system to said corresponding energy source. This enhances the flexibility of the swing door system. For example, a heating element can prevent condensation of the transparent regions of a swing door or light elements can illuminate products.

According to a further preferred embodiment of the swing door arrangement said swing doors form a common plane in a closed position and wherein said mullion provides a single common surface for said sealing elements of said swing doors. This enables easy manufacture and alignment of the sealing elements or gaskets with said mullion.

According to a further preferred embodiment of the swing door arrangement said swing doors form a common plane in a closed position and wherein said mullion provides different surfaces for said sealing elements of said swing doors, preferably wherein said different surfaces are inclined to each other. This enhances flexibility in terms of the position of the sealing elements while enabling reduction of squeezing of the sealing elements when opening the swing door.

According to a further embodiment at least one of the swing doors comprises hinges at opposite ends of said at least one swing door for providing opening and closing by rotation about a rotating axis. This enables a simple and reliable attachment of the swing doors for instance in a cabinet or the like for providing rotational movement of the swing doors. The hinges may provide a self-closing mechanism for the respective swing door, e.g. based on a torsion spring closing system, a hydraulic closing system and/or a gravity closing system using the force of gravity for closing the respective swing door.

According to a further embodiment, a transparent pane of at least one of said adjacent swing doors comprises a gas-filled insulating glass unit (IG) or a vacuum insulated glass unit (VIG). This provides the advantage that the inside of the freezer device being insulated against the warm ambient air. Typically, the gas-filled insulating glass unit and/or the vacuum insulated glass unit comprise at least two glass panes, often three glass panes, being spaced apart from each other by one or more spacers or spacer elements. The glass panes may comprise a thickness of 3 mm to 5 mm, often 4 mm and/or may comprise an antifog-coating or an antifog foil and/or a heatable coating and/or a low-emissivity coating and/or an anti-reflective coating. In vacuum insulation glass units (VIG) the spacer elements may have a depth of 0.5 mm to 1.5 mm, preferably of below 1 mm. These spacer elements of the VIG are used in combination with a circumferential edge sealing. In gas filled insulation glass units (IG) the circumferential spacer elements may have a depth of 4 to 20 mm. The space between the glass panes can be filled with a gas in case of an insulating glass unit (IG) or may be evacuated in case of a vacuum insulated glass unit (VIG). For not obstructing the view through the glass units the spacers can be made of a transparent material. Generally, the transparent pane of said swing doors can comprise several glass panes one above the other.

According to a further embodiment preferably when a swing door comprises a gas filled insulation glass unit a thickness of a swing door with at least one sealing is equal to or smaller than 40 mm, preferably equal to or smaller than 30 mm, in particular equal to or smaller than 26 mm, wherein said thickness being measured in a handle-free region parallel to the opening direction in a closed position of said swing door and/or wherein a width of a region in a closed position of said swing door comprising at least one sealing, a center of said rotating axis of at least one of said swing doors, preferably further comprising at least one profile and spacer elements for spacing apart panes of a swing door, wherein said width being measured perpendicular to the opening direction in a closed position of said swing door and parallel to the plane of said panes of said swing door, is equal to or smaller than 50 mm, preferably equal to or smaller than 41 mm, in particular equal to or smaller than 34 mm. This reduces the blocking of an angled view for customers, i.e. the angled view for customers is enhanced on the products when looking through the swing doors. The dimensions of a handle for opening of the swing door are not included when measuring the thickness or width of a swing door. In other words, the minimal distance between the transparent regions of the different adjacent swing doors may be defined as width. Thickness and width are measured in any given height of the transparent panes.

According to a further embodiment preferably when a swing door comprises a vacuum insulation glass unit the thickness of a swing door with at least one sealing is equal to or smaller than 35 mm, preferably equal to or smaller than 25 mm, in particular equal to or smaller than 20 mm, preferably equal to or smaller than 16 mm, wherein said thickness being measured in a handle-free region parallel to the opening direction in a closed position of said swing door and/or wherein a width of a region in a closed position of said swing door comprising at least one sealing, a center of said rotating axis of at least one of said swing doors, preferably further comprising at least one profile and spacer elements for spacing apart panes of a swing door, wherein said width being measured perpendicular to the opening direction in a closed position of said swing door and parallel to the plane of said panes of said swing door, is equal to or smaller than 50 mm, preferably equal to or smaller than 41 mm, in particular equal to or smaller than 34 mm, preferably equal to 28 mm, This reduces the blocking of an angled view for customers , i.e. the angled view for customers is enhanced on the products when looking through the swing doors.

According to a further embodiment of the freezer or chiller device the swing doors of the swing door system are arranged such to open in the same direction of the aperture angle i.e. all doors are left-side hinged or all doors are right-side hinged. This provides a very simple handling in particular opening and closing of the swing doors since the customer is only confronted with swing doors opening in the same way.

According to a further embodiment of the freezer or chiller device the swing doors of the swing door system are arranged such to open in the opposite aperture angle directions, i.e. for two adjacent doors one is left-side hinged and one is right-side hinged. This provides a large entrance to the inside of a cabinet for a customer, when both swing doors open in opposite directions.

In the drawing
- Fig. 1: shows a cross-sectional view of part of a swing door system according to an embodiment of the present invention;
- Fig. 2: shows a cross-sectional view of part of a swing door system according to an embodiment of the present invention;
- Fig. 3: shows a cross-sectional view of part of a swing door system according to an embodiment of the present invention;
- Fig. 4: shows a cross-sectional view of part of a swing door system;
- Fig. 5: shows a perspective view of the swing door system according to figure 4;
- Fig. 6: shows a cross-sectional view of part of a swing door system according to an embodiment of the present invention;
- Fig. 7: shows a perspective view of a part of a freezer device according to an embodiment of the present invention; and
- Fig. 8: shows cross-sectional view of part of a swing door system according to an embodiment of the present invention.

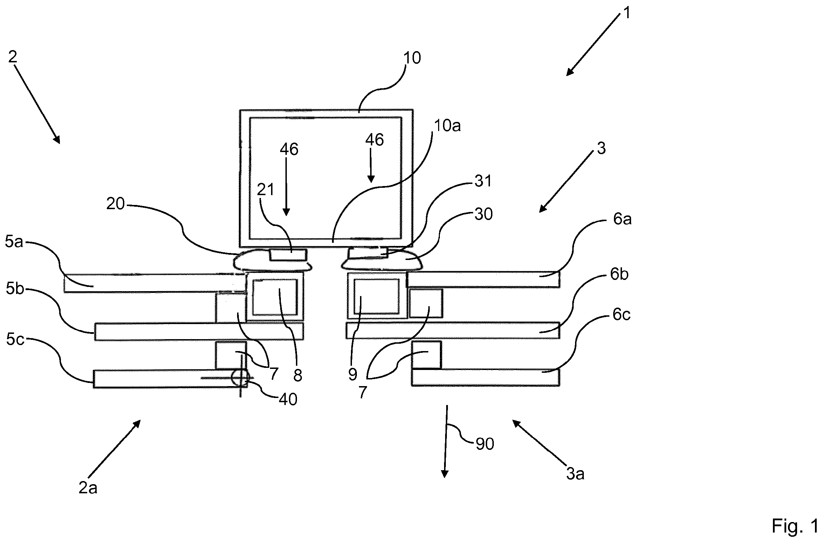

Figure 1 shows a cross-sectional view of part of a swing door system according to an embodiment of the present invention.

In figure 1 a swing door system 1 is shown comprising two adjacent swing doors 2, 3.

The swing doors 2, 3 each comprise a transparent region 2a, 3a, formed by a plurality of glass panes 5a, 5b, 5c, 6a, 6b, 6c which are spaced apart from each other by spacers 7. The glass panes 5a, 5b, 5c, 6a, 6b, 6c provide insulation between opposite sides of the swing doors 2, 3. The glass panes 5a, 5b, 5c, 6a, 6b, 6c are arranged perpendicular to the opening direction 90 of the swing doors 2, 3. The left swing door 2 may be rotated about a rotating axis 90 being off the center of the swing door 2 in the direction to the outer glass pane 5c. The middle glass panes 5b, 6b of the respective swing door 2, 3 extending further as the other glass panes 5b, 5c in the direction to the respective other swing door 3, 2 without touching themselves. These extending glass panes 5b, 6b each comprise a quadratic hollow profile 8, 9 being dimensioned such to fill the rectangular space or area formed by the inner respective glass pane 5a, 6b and the difference in length between the inner non-extending glass pane 5a, 6a and the extending glass pane 5b, 6b. The terms "inner" and outer" refer here to the upper and lower area of Figure 1 being separated by the swing door system 1.

On the surface of each hollow profile 8, 9 being parallel to the glass panes 5a, 5b, 5c, 6a, 6b, 6c in opposite direction of the opening direction 90 each hollow profile 8, 9 comprises a compressible sealing 20, 30 each provided with a magnet 21, 31, preferably embedded in the respective sealing 20, 30. The magnets 21, 31 interact with a rectangular shaped hollow mullion 10 for providing a force locking, i.e. magnetic, connection 46 for thermal insulation. Both magnets 21, 31 interact with the same surface 10a of the mullion 10 being arranged parallel to the transparent panes 2a, 3b formed by the glass panes 5a, 5b, 5c, 6a, 6b, 6c. Mullion 10, hollow profiles 8, 9 and spacers 7 in figure 1 are transparent, the sealings 20, 30 may be translucent or transparent.

In general mullion 10, hollow profiles 8, 9, spacers 7 and/or the sealings 20, 30 may be made of or comprise at least one of: transparent plastic, e.g. thermoplastic, in particular PMMA, poly(methyl methacrylate) or polycarbonate or glass.

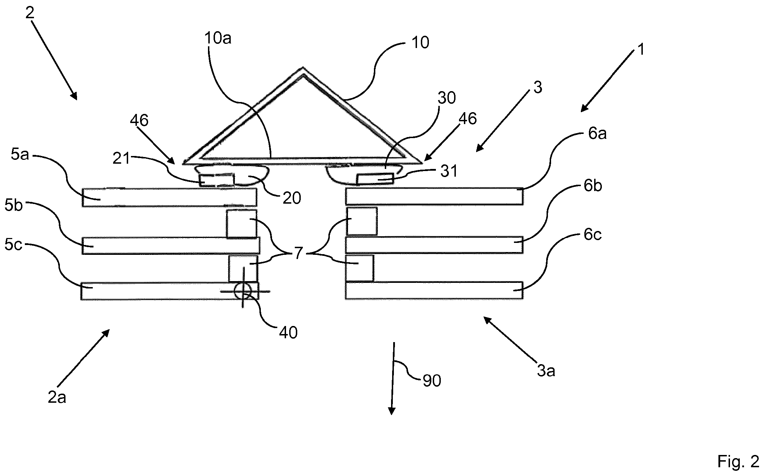

Figure 2 shows a cross-sectional view of the swing door system according to an embodiment of the present invention.

In detail figure 2 shows in general a swing door system 1 according to Fig. 1 The differences between the swing door system 1 according to Fig. 2 and the swing door system 1 according to Fig. 1 is that the swing door system 1 according to figure 2 comprises a) a mullion 10 having a triangular form, b) the sealings 20, 30 being attached to the mullion 10 and c) no hollow profiles in or at the swing doors 2, 3 and no extending glass panes 5b, 6b are provided. In detail with regard to the difference a) the mullion 10 has triangular shape in figure 2. The triangular shaped mullion 10 is symmetrically arranged with the basis of the "triangle" being parallel to the transparent panes 2a, 3a. The height of the "triangle" is parallel to the opening direction 90. In detail and with regard to difference b) the sealings 20, 30 are attached to the basis of the "triangle", here formed by the mullion surface 10a. The magnets 21, 31 are attached to the sealing 20, 30 so that they can interact with a corresponding counterpart of the swing door 2, 3, in particular with an element in or with the inner glass panes 5a, 6a. With regard to the difference c) the swing doors 2, 3 both have three glass-panes 5a, 5b, 5c, 6a, 6b, 6c, wherein none of them extends over the other. Mullion 10, and spacers 7 may be transparent, the sealings 20, 30 may be translucent or transparent here in figure 2.

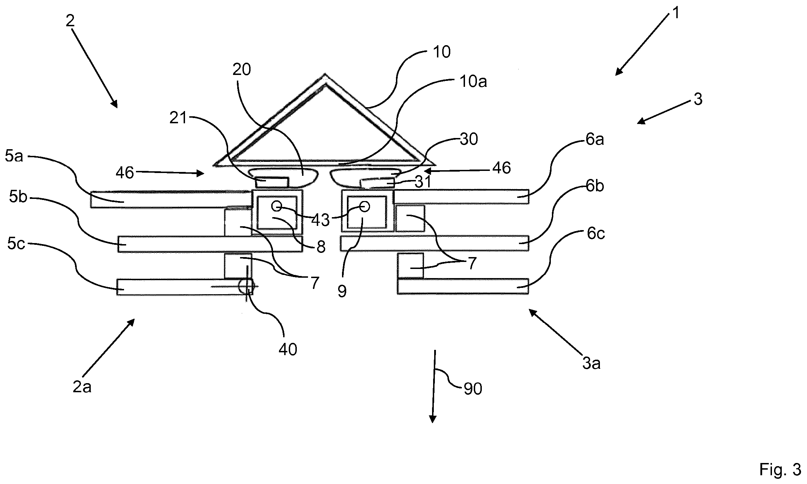

Figure 3 shows a cross-sectional view of a swing door system according to an embodiment of the present invention.

In detail figure 3 shows in general a swing door system 1 with swing doors 2, 3 without the attached sealings 20, 30 according to Fig. 1 and a mullion 10 with sealings 20, 30 attached to it according to Fig. 2. Further the hollow profiles 8, 9 attached to the swing doors 2, 3 each comprise a vertically arranged warm air tunnel 43 inside to provide heating of the areas of the swing doors 2, 3 and/or part of the mullion 10 when being in closed position.

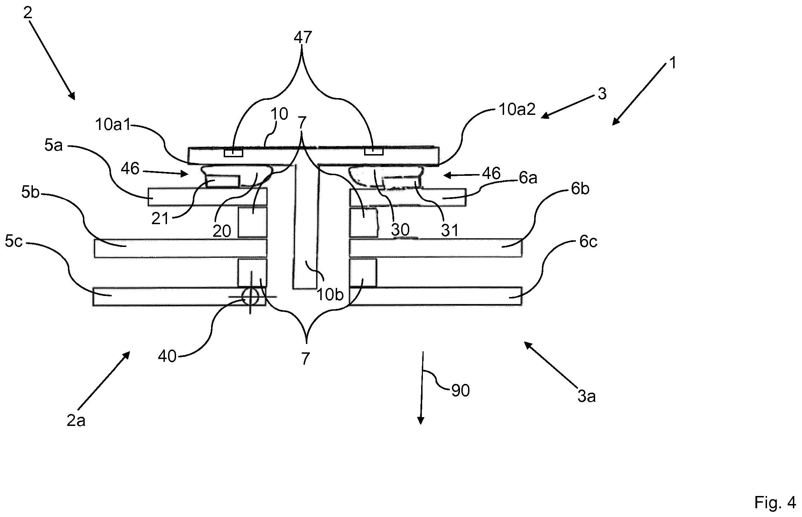

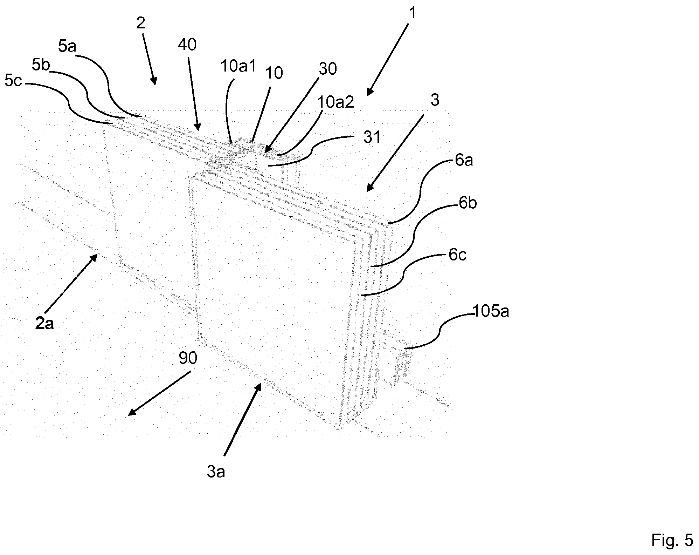

Figure 4 shows a cross-sectional view of a swing door system according to an embodiment not part of the present invention and Fig. 5 a corresponding perspective view of the swing door system according to Fig. 4.

In detail figures 4 and 5 show in general a swing door system 1 with swing doors 2, 3 according to Fig. 2 and sealings 20, 30 attached to the mullion 10. However, one of the differences between the swing door system 1 according to figures 4, 5 and the swing door system 1 according figure 2 is that the swing door system 1 according to figures 4, 5 comprise a mullion 10 having a t-shaped form with an arm 10b of the mullion 10 extending between the swing doors 2, 3 in their closed position. Due to the arm 10b there is no common single surface 10a for attaching the sealings 20, 30 at the mullion 10 but two separated surfaces 10a1, 10a2, each being parallel to the transparent panes 2a, 3a of the swing doors 2, 3. Further the arm of the mullion 10 extending parallel to said transparent panes 2a, 3a comprises light elements 47 on the surface of the mullion 10 on the opposite side of the swing doors 2, 3 to illuminate for instance products. Further the hollow profiles 8, 9 attached to the swing doors 2, 3 each comprise a vertically arranged warm air tunnel 43 inside to provide heating of the areas of the swing doors 2, 3 and/or part of the mullion 10 when being in closed position. Further in Fig. 5 a lower horizontal profile 105b is shown providing a further stop for the swing door 3 which may comprise a further sealing to interact with the swing door 3. Mullion 10 may be non-transparent, spacers 7 and glass panes 5a, 5b, 5c, 6a, 6b, 6c may be transparent, and the sealings 20, 30 may be translucent here in figures 4, 5.

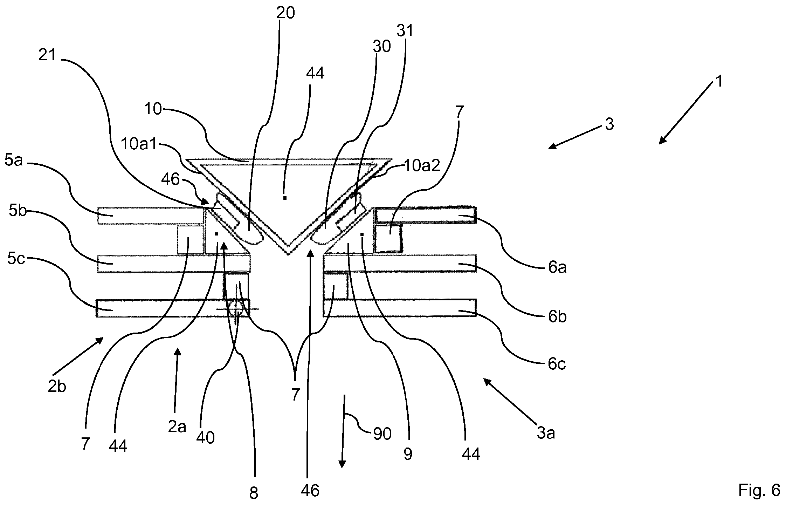

Figure 6 shows a cross-sectional view of a swing door system according to an embodiment of the present invention.

Figure 6 shows in general a swing door system 1 according to Figure 3. The differences between the swing doors systems 1 according to Fig 6 and Fig. 3 are, that the swing door system 1 according to Fig. 6 comprises a triangular shaped mullion 10 with inclined surfaces 10a1, 10a2 against each other. In other words, the mullion 10 of Fig. 6 has been mirrored around the basis 10a of the mullion 10 and the sealings 20, 30 have been attached to these inclined surfaces 10a1, 10a2. Due to this difference between said swing door systems 1 the hollow profiles 8, 9 of the swing doors 2, 3 according to figure 6 have also triangular shape so that the magnets 21, 31 can interact with a surface of the corresponding profiles 8, 9 parallel to the surfaces 10a1, 10a2 of the mullion 10. A further difference between said swing door systems 1 is that the swing door system 1 according to figure 6 has no extending glass panes 5b, 6b but recessed glass panes 5a, 6a so that the triangular shaped profiles 8, 9 can be attached with a side parallel to the transparent panes 2a, 3a to the middle glass pane 5b, 6b and to a surface perpendicular to the glass panes 5a, 6a with the basis of the triangle/hollow profile 8, 9 being parallel to the corresponding inclined surface 10a1, 10a2 of the mullion 10. Spacers 7 and glass panes 5a, 5b, 5c, 6a, 6b, 6c may be transparent, and the sealings 20, 30 may be translucent here in figure 6. Further a vertically arranged heating wire 44 in each of the profiles 8, 9 as well as in the mullion 10 is provided.

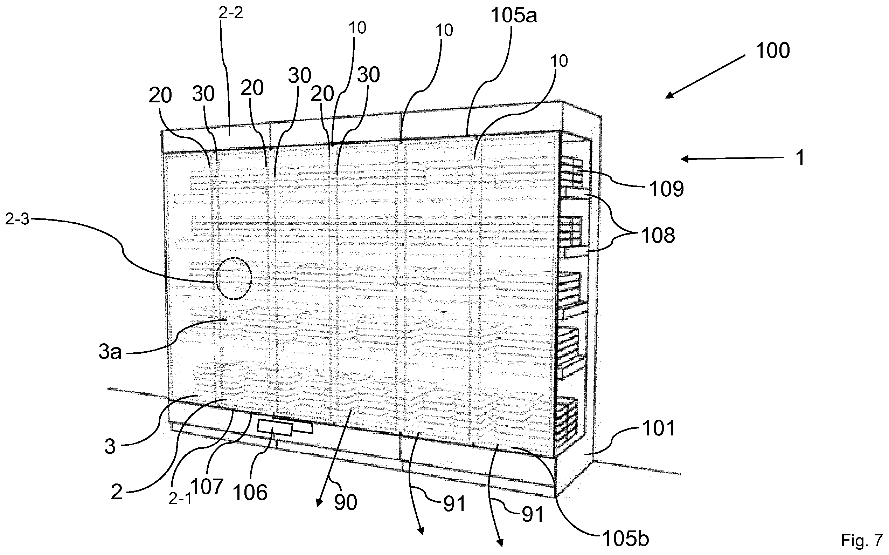

Figure 7 shows a perspective view of a freezer device according to the present invention.

In detail figure 7 shows a freezer device 100 with a swing door system 1. The freezer device 100 comprises a cabinet 101 and further a top horizontal element 105a and a bottom horizontal element 105b. The freezer device 100 comprises six swing doors 2, 3, two of them each forming a swing door system providing a sealing function between them and a corresponding mullion 10. The swing doors 2, 3 each have a transparent region 2a, 3a so that a customer in front of the freezer device 100 can see the products 109 placed on shelves 108 inside the freezer device 100 through the swing doors 2, 3 without having to open the swing doors 2, 3. The sealings 20, 30 the swing doors 2, 3 are transparent.

Further, the horizontal elements 105a, 105b provide a stop for each of the swing doors 2, 3. The opening direction 90 when the swing doors 2, 3 are closed is perpendicular to the swing doors 2, 3. The angled direction 91 of the swing doors 2, 3 is the same for all swing doors 2, 3 of the freezer device 100. All swing doors open to the right, therefore all doors are hinged at their right side when looking perpendicular to the transparent panes of the freezer device 100. Further, the freezer device 100 comprises an energy source 106, which is connected with an interface 107 which enables to provide energy to a heating element 43, 44 or light elements 47 inside the swing doors 2, 3. Further the lower vertical area 2-1, the upper vertical area 2-2 and the area of a handle 2-3 is shown. These areas 2-1, 2-2 and 2-3 are preferred for arranging force-locking elements like magnets 21, 31 or the like, when they are optically non-transparent.

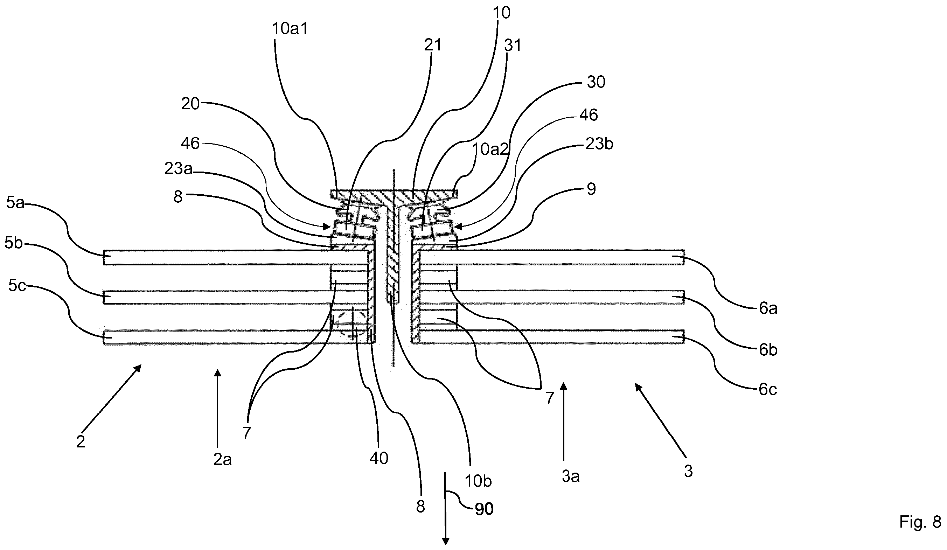

Figure 8 shows a cross-sectional view of a swing door system according to an embodiment of the present invention.

Figure 8 shows a swing door system 1 comprising two adjacent swing doors 2, 3 wherein each swing door 2, 3 comprises transparent panes 3a, 3b being spaced from each other by spacers 7. Furthermore, a mullion 10 is arranged. The mullion 10 is T-shaped and comprises a part or arm 10b that reaches between the adjacent swing doors 2, 3, when the swing doors 2, 3 are in the closed position. It is possible that the part/arm 10b is shorter, such that it does not reach in the area between the adjacent swing doors 2, 3. The mullion 10 further comprises surfaces 10a1, 10a2 onto which the sealings or gaskets 20, 30 are fixed, for example glued or snapped into. The adjacent swing doors include wedges 23a, 23b that are made of a material that interacts with the magnets 21, 31 of the gaskets 20, 30. For example, the wedges 23a, 23b are made of steel. The surfaces 10a1, 10a2 of the mullion 10 are inclined with respect to the transparent panes 2a, 3a when the adjacent swing doors 2, 3 are in the closed position. Hence, shear forces are minimized that are acting on the gaskets 20, 30 when the swing doors 2, 3 are opened, i.e. when the magnets 21, 31 are disconnected from the wedges 23a, 23b. Furthermore, the design of the mullion 10 avoids or minimizes shear forces acting on the gaskets 20, 30 during the initial phase when opening the swing doors 2, 3 in the opening direction 90. Both swing doors 2, 3 each have a protective L-shaped profile 8, 9, extending on the swing doors 2, 3 parallel to the extending arm 10b of the mullion and in part on the inner surface of the corresponding glass pane 5a, 6a of the swing door 5, 6, i.e. the surface next to the surfaces 10a1, 10a2 of the mullion 10. On the latter, i.e. the smaller arm of the "L" the wedges 23a, 23b are arranged.

To summarize at least one of the embodiments of the present invention provides or enables
- high customer comfort
- high customer perceived value
- simple and cost-effective implementation
- large field of view compared with conventional swing door systems
- reliable sealing function, thus low energy consumption is enabled
- mechanical robustness
- stability and rigidity

### List of reference signs

- 1: Swing door system
- 2: Left swing door
- 2a: Transparent region
- 2-1: Lower section
- 2-2: Upper section
- 2-3: Handle area
- 3: Right swing door
- 3a: Transparent region
- 5a: Glass pane
- 5b: Glass pane
- 5c: Glass pane
- 6a: Glass pane
- 6b: Glass pane
- 6c: Glass pane
- 7: Spacer
- 8: Profile left swing door
- 9: Profile right swing door
- 10: Mullion
- 10a, 10a1, 10a2: Surface mullion
- 10b: Arm
- 20: Sealing/gasket
- 21: Magnet
- 23a, 23b: Wedge
- 30: Sealing
- 31: Magnet
- 40: Rotating axis
- 43: Warm air tunnel
- 44: Heating wire
- 45: Heating cable
- 46: Force-locking connection
- 47: Light element
- 90: Opening direction
- 91: Angled direction
- 100: Freezer device
- 101: Cabinet
- 105a: Top horizontal element
- 105b: Bottom horizontal element
- 106: Energy source
- 107: Interface
- 108: Shelf
- 109: Product

## Claims

1. Freezer or chiller device (100), comprising a swing door system (1) being arranged in a cabinet (101), said swing door system (1) comprises at least one swing door (2) and a further swing door (3), a mullion (10) and sealing elements (20, 30), wherein each swing door (2, 3) comprises a transparent pane (2a, 3a) and wherein said sealing elements (20, 30) are arranged between each swing door (2, 3) and the mullion (10) in a closed position of said swing doors (2, 3), **characterized in that** said mullion (10) is fully transparent.

2. Freezer or chiller device (100) according to claim 1, wherein each sealing element (20, 30) is at least translucent at least in part and/or wherein each sealing element (20, 30) is compressible.

3. Freezer or chiller device (100) according to one of the claims 1-2, wherein said mullion and/or said sealing elements (20, 30) comprises at least one force-locking element (21) providing a force-locking connection between said mullion (10) and said at last one swing door (2), preferably wherein said force-locking element (21) of said sealing elements (20, 30) is arranged at the lower (2-1) and/or upper vertical section (2-2) of said swing door (2) and/or in the area (2-3) of a handle.

4. Freezer or chiller device (100) according to claim 3, wherein said force-locking element (21) is a magnet, preferably a permanent magnet and/or wherein said force-locking element (21) is provided in form of a plurality of particles, preferably distributed in particular uniformly at least in part within the sealing element (20, 30) and/or wherein said at least one swing door (2, 3) comprises a heating element (44, 45), preferably in form of a heating wire (44) and/or heating cable (45), wherein said sealing element (20, 30) is formed translucent to hide said heating element (44, 45).

5. Freezer or chiller device (100) according to one of the claims 1-4, wherein said swing door system (1) comprises a reflective element, preferably in form of a mirror element and/or a reflective coating and/or wherein said at least one swing door (2, 3) comprise a light element (47), preferably in form of LED light strip.

6. Freezer or chiller device (100) according to one of the claims 1-5, wherein said at least one swing door (2, 3) comprises a gas-filled insulating glass unit or a vacuum glass unit, said gas-filled insulating glass unit or said vacuum glass unit comprises at least two glass panes (5a, 5b, 5c, 6a, 6b, 6c) being spaced apart from each other by a spacer element (7), preferably wherein said spacer (7) is at least partially translucent, preferably at least partially transparent, preferably wherein said hollow profile (8,9) and said mullion (10) having essentially the same cross-sectional shape.

7. Freezer or chiller device (100) according to claim 6, wherein said at least one swing door (2, 3) and/or said mullion (10) comprise a hollow profile (8, 9).

8. Freezer or chiller device (100) according to claims 1-7, wherein said heating element (44, 45) and/or said light element (47) is arranged inside said hollow profile (8, 9) of said at least one swing door (2, 3).

9. Freezer or chiller device (100) according to claim 7, wherein said hollow profile (8, 9) of said at least one swing door (2, 3) is arranged between at least one glass pane forming said transparent pane of said at least one swing door (2, 3) and said sealing element (20, 30), preferably wherein said at least one swing door (2, 3) comprises at least two glass panes (5a, 5b, 5c, 6a, 6b, 6c), wherein one pane (5b, 6b) extends perpendicular to an opening direction (90) of said at least one swing door (2, 3) over the other glass pane (5a, 5c, 6a, 6c), wherein said hollow profile (8, 9) is attached in the extending region of said extending glass pane (5b, 6c).

10. Freezer or chiller device (100) according to one of the claims 1-9, wherein said mullion (10) and/or hollow profile (8, 9) have an essentially rectangular, essentially triangular or essentially t-shaped cross-section and/or wherein said sealing element (20, 30) is attached to said mullion (10).

11. Freezer or chiller device (100) according to one of the claims 1-10, wherein a rotating axis (40) of said at least one swing door (2, 3) is in the center of said at least one swing door (2, 3), said center being defined with respect to the thickness of said at least one swing door (2, 3) perpendicular to the opening direction (90) in a closed position of said at least one swing door (2, 3) and/or wherein the rotating axis (40) of said at least one swing door (2, 3) is off the center of said swing door (2, 3), said center being defined with respect to the thickness of said swing door (2, 3) perpendicular to the opening direction in a closed position of said swing door (2, 3).

12. Freezer or chiller device (100) according to one of the claims 1-11, comprising an upper and/or lower horizontal element (105a, 105b) to provide a stop for said swing doors (2, 3) of said swing door system (1) and/or to provide a part for force-locked swing doors (2, 3) at the freezer or chiller device.

13. Freezer or chiller device (100)according to one of the claims 1-12, wherein said swing doors (2, 3) form a common plane in a closed position and wherein said mullion (10) provides a single common surface (10a) for said sealing elements (20, 30) of said swing doors (2, 3) or wherein said swing doors (2, 3) form a common plane in a closed position and wherein said mullion (10) provides different surfaces (10a1, 10a2) for said sealings (20, 30) of said swing doors (2, 3), preferably wherein said different surfaces (10a1, 10a2) are inclined to each other.

## Patentansprüche

1. Gefrier- oder Kühlvorrichtung (100), umfassend ein in einem Gehäuse (101) angeordnetes Schwenktürsystem (1), wobei das Schwenktürsystem (1) zumindest eine Schwenktür (2) und eine weitere Schwenktür (3), einen Pfosten (10) und Dichtungselemente (20, 30) umfasst, wobei jede Schwenktür (2, 3) eine transparente Scheibe (2a, 3a) aufweist und wobei die Dichtungselemente (20, 30) zwischen jeder Schwenktür (2, 3) und dem Pfosten (10) in einer geschlossenen Position der Schwenktüren (2, 3) angeordnet sind, **dadurch gekennzeichnet, dass** der Pfosten (10) vollständig transparent ist.

2. Gefrier- oder Kühlvorrichtung (100) nach Anspruch 1, wobei jedes Dichtungselement (20, 30) zumindest teilweise lichtdurchlässig ist und/oder wobei jedes Dichtungselement (20, 30) komprimierbar ist.

3. Gefrier- oder Kühlvorrichtung (100) nach einem der Ansprüche 1-2, wobei der Pfosten und/oder die Dichtungselemente (20, 30) zumindest ein kraftschlüssiges Element (21) aufweisen, das eine kraftschlüssige Verbindung zwischen dem Pfosten (10) und der zumindest einen Schwenktür (2) bereitstellt, wobei das kraftschlüssige Element (21) der Dichtungselemente (20, 30) vorzugsweise am unteren (2-1) und/oder oberen vertikalen Abschnitt (2-2) der Schwenktür (2) und/oder im Bereich (2-3) eines Griffs angeordnet ist.

4. Gefrier- oder Kühlvorrichtung (100) nach Anspruch 3, wobei das kraftschlüssige Element (21) ein Magnet, vorzugsweise ein Permanentmagnet, ist und/oder wobei das kraftschlüssige Element (21) in Form einer Vielzahl von Partikeln, vorzugsweise zumindest teilweise, insbesondere gleichmäßig verteilt innerhalb des Dichtungselements (20, 30), bereitgestellt ist und/oder wobei die zumindest eine Schwenktür (2, 3) ein Heizelement (44, 45), vorzugsweise in Form eines Heizdrahtes (44) und/oder eines Heizkabels (45), umfasst, wobei das Dichtungselement (20, 30) lichtdurchlässig ausgebildet ist, um das Heizelement (44, 45) zu verbergen.

5. Gefrier- oder Kühlvorrichtung (100) nach einem der Ansprüche 1-4, wobei das Schwenktürsystem (1) ein reflektierendes Element, vorzugsweise in Form eines Spiegelelements und/oder einer reflektierenden Beschichtung, umfasst und/oder wobei die zumindest eine Schwenktür (2, 3) ein Lichtelement (47), vorzugsweise in Form eines LED-Lichtstreifens, umfasst.

6. Gefrier- oder Kühlvorrichtung (100) nach einem der Ansprüche 1-5, wobei die zumindest eine Schwenktür (2, 3) eine gasgefüllte Isolierglaseinheit oder eine Vakuumglaseinheit umfasst, wobei die gasgefüllte Isolierglaseinheit oder die Vakuumglaseinheit zumindest zwei Glasscheiben (5a, 5b, 5c, 6a, 6b, 6c) umfasst, die durch ein Abstandselement (7) voneinander beabstandet sind, vorzugsweise wobei das Abstandselement (7) zumindest teilweise lichtdurchlässig, vorzugsweise zumindest teilweise transparent ist, vorzugsweise wobei das Hohlprofil (8, 9) und der Pfosten (10) im Wesentlichen die gleiche Querschnittsform aufweisen.

7. Gefrier- oder Kühlvorrichtung (100) nach Anspruch 6, wobei die zumindest eine Schwenktür (2, 3) und/oder der Pfosten (10) ein Hohlprofil (8, 9) aufweisen.

8. Gefrier- oder Kühlvorrichtung (100) nach den Ansprüchen 1-7, wobei das Heizelement (44, 45) und/oder das Leuchtelement (47) innerhalb des Hohlprofils (8, 9) der zumindest einen Schwenktür (2, 3) angeordnet ist.

9. Gefrier- oder Kühlvorrichtung (100) nach Anspruch 7, wobei das Hohlprofil (8, 9) der zumindest einen Schwenktür (2, 3) zwischen zumindest einer die transparente Scheibe der zumindest einen Schwenktür (2, 3) bildenden Glasscheibe und dem Dichtungselement (20, 30) angeordnet ist, vorzugsweise wobei die zumindest eine Schwenktür (2, 3) zumindest zwei Glasscheiben (5a, 5b, 5c, 6a, 6b, 6c) umfasst, wobei sich eine Scheibe (5b, 6b) senkrecht zu einer Öffnungsrichtung (90) der zumindest einen Schwenktür (2, 3) über die andere Glasscheibe (5a, 5c, 6a, 6c) hinaus erstreckt, wobei das Hohlprofil (8, 9) im verlängerten Bereich der verlängerten Glasscheibe (5b, 6c) befestigt ist.

10. Gefrier- oder Kühlvorrichtung (100) nach einem der Ansprüche 1-9, wobei der Pfosten (10) und/oder das Hohlprofil (8, 9) einen im Wesentlichen rechteckigen, im Wesentlichen dreieckigen oder im Wesentlichen T-förmigen Querschnitt aufweisen und/oder wobei das Dichtungselement (20, 30) an dem Pfosten (10) befestigt ist.

11. Gefrier- oder Kühlvorrichtung (100) nach einem der Ansprüche 1-10, wobei eine Drehachse (40) der zumindest einen Schwenktür (2, 3) in der Mitte der zumindest einen Schwenktür (2, 3) liegt, wobei die Mitte in Bezug auf die Dicke der zumindest einen Schwenktür (2, 3) senkrecht zur Öffnungsrichtung (90) in einer geschlossenen Position der zumindest einen Schwenktür (2, 3) definiert ist, und/oder wobei die Drehachse (40) der zumindest einen Schwenktür (2, 3) außerhalb der Mitte der Schwenktür (2, 3) liegt, wobei die Mitte in Bezug auf die Dicke der Schwenktür (2, 3) senkrecht zur Öffnungsrichtung in einer geschlossenen Position der Schwenktür (2, 3) definiert ist.

12. Gefrier- oder Kühlvorrichtung (100) nach einem der Ansprüche 1-11, umfassend ein oberes und/oder unteres horizontales Element (105a, 105b), um einen Anschlag für die Schwenktüren (2, 3) des Schwenktürsystems (1) bereitzustellen und/oder um einen Teil für eine kraftschlüssige Verbindung der Schwenktüren (2, 3) an der Gefrier- oder Kühlvorrichtung bereitzustellen.

13. Gefrier- oder Kühlvorrichtung (100) nach einem der Ansprüche 1-12, wobei die Schwenktüren (2, 3) in einer geschlossenen Position eine gemeinsame Ebene bilden und wobei der Pfosten (10) eine einzige gemeinsame Fläche (10a) für die Dichtungselemente (20, 30) der Schwenktüren (2, 3) bereitstellt oder wobei die Schwenktüren (2, 3) in einer geschlossenen Position eine gemeinsame Ebene bilden und wobei der Pfosten (10) unterschiedliche Flächen (10a1, 10a2) für die Dichtungen (20, 30) der Schwenktüren (2, 3) bereitstellt, vorzugsweise wobei die unterschiedlichen Flächen (10a1, 10a2) zueinander geneigt sind.

## Revendications

1. Congélateur ou dispositif de refroidissement (100), comprenant un système de portes oscillantes (1) prévu dans une armoire (101), ledit système de portes oscillantes (1) comprenant au moins une porte oscillante (2) et une autre porte oscillante (3), un meneau (10) et des éléments d'étanchéité (20, 30), dans lequel chaque porte oscillante (2, 3) comprend un carreau transparent (2a, 3a) et dans lequel lesdits éléments d'étanchéité (20, 30) sont prévus entre chaque porte oscillante (2, 3) et le meneau (10) dans une position fermée desdites portes oscillantes (2, 3), **caractérisé en ce que** ledit meneau (10) est entièrement transparent.

2. Congélateur ou dispositif de refroidissement (100) selon la revendication 1, dans lequel chaque élément d'étanchéité (20, 30) est au moins translucide au moins en partie et/ou dans lequel chaque élément d'étanchéité (20, 30) est compressible.

3. Congélateur ou dispositif de refroidissement (100) selon l'une des revendications 1 à 2, dans lequel ledit meneau et/ou lesdits éléments d'étanchéité (20, 30) comprennent au moins un élément de verrouillage de force (21) qui assure une liaison de verrouillage de force entre ledit meneau (10) et ladite au moins une porte oscillante (2), dans lequel, de préférence, ledit élément de verrouillage de force (21) desdits éléments d'étanchéité (20, 30) est prévu au niveau de la section verticale inférieure (2-1) et/ou supérieure (2-2) de ladite porte oscillante (2) et/ou dans la zone (2-3) d'une poignée.

4. Congélateur ou dispositif de refroidissement (100) selon la revendication 3, dans lequel ledit élément de verrouillage de force (21) est un aimant, de préférence un aimant permanent, et/ou dans lequel ledit élément de verrouillage de force (21) est prévu sous la forme d'une pluralité de particules, de préférence réparties en particulier de façon uniforme au moins en partie dans l'élément d'étanchéité (20, 30), et/ou dans lequel ladite au moins une porte oscillante (2, 3) comprend un élément chauffant (44, 45), de préférence sous la forme d'un fil chauffant (44) et/ou d'un câble chauffant (45), dans lequel ledit élément d'étanchéité (20, 30) est formé de manière translucide afin de dissimuler ledit élément chauffant (44, 45).

5. Congélateur ou dispositif de refroidissement (100) selon l'une des revendications 1 à 4, dans lequel ledit système de portes oscillantes (1) comprend un élément réfléchissant, de préférence sous la forme d'un élément de miroir et/ou d'un revêtement réfléchissant, et/ou dans lequel ladite au moins une porte oscillante (2, 3) comprend un élément d'éclairage (47), de préférence sous la forme d'une bande lumineuse à LED.

6. Congélateur ou dispositif de refroidissement (100) selon l'une des revendications 1 à 5, dans lequel ladite au moins une porte oscillante (2, 3) comprend une unité de verre isolant rempli de gaz ou une unité de verre à vide, ladite unité de verre isolant rempli de gaz ou ladite unité de verre à vide comprenant au moins deux carreaux de verre (5a, 5b, 5c, 6a, 6b, 6c) espacés l'un de l'autre par une entretoise (7), dans lequel, de préférence, ladite entretoise (7) est au moins partiellement translucide, de préférence au moins partiellement transparente, et dans lequel, de préférence, ledit profilé creux (8, 9) et ledit meneau (10) présentent quasiment la même forme transversale.

7. Congélateur ou dispositif de refroidissement (100) selon la revendication 6, dans lequel ladite au moins une porte oscillante (2, 3) et/ou ledit meneau (10) comprennent un profilé creux (8, 9).

8. Congélateur ou dispositif de refroidissement (100) selon les revendications 1 à 7, dans lequel ledit élément chauffant (44, 45) et/ou ledit élément d'éclairage (47) est prévu à l'intérieur dudit profilé creux (8, 9) de ladite au moins une porte oscillante (2, 3).

9. Congélateur ou dispositif de refroidissement (100) selon la revendication 7, dans lequel ledit profilé creux (8, 9) de ladite au moins une porte oscillante (2, 3) est prévu entre au moins un carreau de verre qui forme ledit carreau transparent de ladite au moins une porte oscillante (2, 3) et ledit élément d'étanchéité (20, 30), dans lequel, de préférence, ladite au moins une porte oscillante (2, 3) comprend au moins deux carreaux de verre (5a, 5b, 5c, 6a, 6b, 6c), dans lequel un carreau (5b, 6b) s'étend perpendiculairement à un sens d'ouverture (90) de ladite au moins une porte oscillante (2, 3) au-delà de l'autre carreau de verre (5a, 5c, 6a, 6c), dans lequel ledit profilé creux (8, 9) est fixé dans la zone d'extension dudit carreau de verre en extension (5b, 6c).

10. Congélateur ou dispositif de refroidissement (100) selon l'une des revendications 1 à 9, dans lequel ledit meneau (10) et/ou ledit profilé creux (8, 9) possèdent une section transversale essentiellement rectangulaire, essentiellement triangulaire ou essentiellement en forme de T, et/ou dans lequel ledit élément d'étanchéité (20, 30) est fixé sur ledit meneau (10).

11. Congélateur ou dispositif de refroidissement (100) selon l'une des revendications 1 à 10, dans lequel un axe de rotation (40) de ladite au moins une porte oscillante (2, 3) se trouve au centre de ladite au moins une porte oscillante (2, 3), ledit centre étant défini par rapport à l'épaisseur de ladite au moins une porte oscillante (2, 3) perpendiculairement au sens d'ouverture (90) dans une position fermée de ladite au moins une porte oscillante (2, 3), et/ou dans lequel l'axe de rotation (40) de ladite au moins une porte oscillante (2, 3) est décalé par rapport au centre de ladite porte oscillante (2, 3), ledit centre étant défini par rapport à l'épaisseur de ladite porte oscillante (2, 3) perpendiculairement au sens d'ouverture dans une position fermée de ladite porte oscillante (2, 3).

12. Congélateur ou dispositif de refroidissement (100) selon l'une des revendications 1 à 11, comprenant un élément horizontal supérieur et/ou inférieur (105a, 105b) destiné à assurer une butée pour lesdites portes oscillantes (2, 3) dudit système de portes oscillantes (1) et/ou à fournir une partie pour les portes oscillantes à verrouillage de force (2, 3) au niveau du congélateur ou du dispositif de refroidissement.

13. Congélateur ou dispositif de refroidissement (100) selon l'une des revendications 1 à 12, dans lequel lesdites portes oscillantes (2, 3) forment un plan commun dans une position fermée et dans lequel ledit meneau (10) offre une surface commune (10a) pour lesdits éléments d'étanchéité (20, 30) desdites portes oscillantes (2, 3), ou dans lequel lesdites portes oscillantes (2, 3) forment un plan commun dans une position fermée et dans lequel ledit meneau (10) offre différentes surfaces (10a1, 10a2) pour lesdits éléments d'étanchéité (20, 30) desdites portes oscillantes (2, 3), dans lequel, de préférence, lesdites surfaces différentes (10a1, 10a2) sont inclinées les unes par rapport aux autres.
